(19) **Europäisches Patentamt / European Patent Office / Office européen des brevets**

(11) **EP 1 612 192 B1**

(12) **EUROPEAN PATENT SPECIFICATION**

(45) Date of publication and mention
of the grant of the patent:
**07.02.2007 Bulletin 2007/06**

(51) Int Cl.:
***C03B 37/018*** (2006.01)   ***C03B 37/014*** (2006.01)

(21) Application number: **05011829.8**

(22) Date of filing: **01.06.2005**

(54) **Methods for optical fiber manufacture**

Verfahren zur Herstellung optischer Fasern

Procédé de fabrication de fibres optiques

(84) Designated Contracting States:
**FR**

(30) Priority: **29.06.2004 US 880205**

(43) Date of publication of application:
**04.01.2006 Bulletin 2006/01**

(73) Proprietor: **Furukawa Electric North America Inc.
Norcross, GA 30071 (US)**

(72) Inventors:
• **Baynham, Grant
Chattanooga
Tennessee 37421 (US)**
• **Glodis, Paul F.
Berkeley
California 94703 (US)**
• **Lingle, Robert, Jr.
Norcross
Georgia 30092 (US)**

(74) Representative: **Schoppe, Fritz et al
Schoppe, Zimmermann, Stöckeler & Zinkler
Patentanwälte
Postfach 246
82043 Pullach bei München (DE)**

(56) References cited:
EP-A- 1 035 083        US-A- 4 636 236
US-A- 4 793 843        US-A- 4 832 721

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**Field of the Invention**

This invention relates to methods for manufacturing optical fibers, and to improved optical fiber preform fabrication techniques.

**Background of the Invention**

The Modified Chemical Vapor Deposition (MCVD) method is a widely used approach for the manufacture of optical fibers. In this method, the preparation of the preform from which the optical fiber is drawn involves a glass working lathe, where pure glass or glass soot is formed on the inside of a rotating tube by chemical vapor deposition. Deposition of soot inside the tube allows a high degree of control over the atmosphere of the chemical vapor deposition, and consequently over the composition, purity and optical quality of the preform glass. In particular, the glass making up the central portion or core of the preform should be of the highest purity and optical quality since most of the optical power in the fiber will be carried within this region. Accordingly considerable attention is given to the production aspects and properties of the core. Of special concern in the prior art is the well-known refractive index dip at the very center of the core. This is an artifact primarily of the high temperature used in the collapse steps of the MCVD process. It results from non-equilibrium sublimation of Ge species at the processing temperature. This sublimation depletes the surface layer of Ge resulting in a lower refractive index in the very center of the preform. If this refractive index dip is a source of variability in an otherwise well controlled preform manufacturing process, or if the dip is a large enough fraction of the fiber core to compromise the fiber design intent, it is an undesirable feature.

In addition, over and above the change in the refractive index profile, the concentrations of oxygen-deficient Ge and Si defect (sub-oxide) sites in the central core are increased by the loss of oxygen through the collapsing surface. The stoichiometries of silica and germania are $SiO_2$ and $GeO_2$, respectively, which are preserved in an ideal mixed glass such as Ge-doped silica. It is to be understood that the labels $SiO_2$ and $GeO_2$ refer to an atomic bonding configuration where each Si or Ge atom is bonded to four O atoms. Each O atom bonds to two metal atoms (Si or Ge). Thus the molar ratios are 1:2 for metal to oxygen proportionality, i.e. $SiO_2$ and $GeO_2$. The labels SiO or GeO, known as sub-oxides defects, refer to a variety of atomic bonding configurations where a metal atom (Si or Ge) is bonded to less than four O atoms.

It is of importance with respect to the disclosed invention that the region rich in GeO defects (due to loss of excess oxygen in the collapse process) extends well beyond the region where loss of Ge results in a profile center dip. Both of these effects, the refractive index dip and the defect concentration increase, are well known, and various attempts have been made to eliminate them. One technique see e.g. EP 1 035 083 A is to etch the surface layer on the inside of the tube, i.e. the layer that depletes, in the final stages of the process. This is fairly successful in reducing the index dip but is not completely effective in controlling the suboxide defect concentration. Another approach is to heavily dope the last layer(s) deposited, to compensate for lost Germanium. This is only moderately successful in eliminating the refractive index dip, and actually tends to promote the formation of Ge defect centers.

The MCVD technique is widely used in commercial practice and has proved to be a successful and robust process but, as indicated above, certain aspects of the process may still be improved. The improvement envisioned in this invention relates to the properties of the very center section of the core.

It has been noted in the literature that a significant optical loss mechanism in the core of optical fibers produced by MCVD can be created by defect centers that remain in the center of the preform core after consolidation and collapse *[Analysis of the fluorescence method of profiling single mode optical fiber prefroms* - D. L. Philen and W. T. Anderson, Technical Digest, Conference on Optical Fiber Communications (Optical Society of America, Phoenix, AZ, 1982), paper ThEE7]. The presence of this loss mechanism is particularly obvious when the fibers are exposed to hydrogen or ionizing radiation. The formation of sub-oxide defects is favored by insufficient oxygen supply during soot deposition. These can also be produced during high temperature glass processing. As the temperature is raised during collapse, defects may be formed in both pure and doped silica, with concentrations following a typical thermally activated exponential dependence. However, many of these defects heal upon removal of heat source if the local atomic concentrations do not change. Near the gas-solid interface formed by the inner diameter of the collapsing rod, however, mobile atomic or molecular subunits containing Ge and/or O escape the glass permanently and irreversibly. When the oxygen atoms exit from the glass surface, they may leave behind germanium sub-oxide (GeO) and silicon suboxide (SiO) defect centers.

The confirmation of GeO defects in the collapsed preform is straightforward since they can be stimulated by UV light to fluoresce. It is believed that the GeO defect centers react, more readily than SiO defects, with molecular hydrogen to form a hydride species with a strong UV absorption center with a significant tail in the communications window. (The postulated details of the mechanism leading to excess loss should not be construed as a limitation on the invention.) GeO defects thus have significantly greater potential for eventually causing excess loss in the fiber.

## Summary of the Invention

To reduce the number of GeO defect centers produced in the MCVD process, we add a buffer layer of undoped silica as the final step in the glass deposition process before beginning the high temperature collapse step. The buffer layer is preferably undoped silica since the consequences of Si sub-oxide defects with respect to long tem fiber loss increases are less than those associated with Ge sub-oxide defects. The effect of making the last layer, which is the surface layer on the inside of the tube, of undoped silica is two-fold. First there are fewer Ge dopant atoms in the surface layer that may become oxygen deficient during the collapse, and thus a reduced potential for Ge defect center formation. Second, and more fundamental, the buffer layer prevents direct diffusion of O, $O_2$, and $Ge_xO_y$ species out of the deposited Ge-doped silica glass. Ge-atoms may still diffuse out of the Ge-doped region, across the pure silica region, and then out through free surface of the silica buffer layer, with the net effect of altering the refractive index profile (however a buffer layer slows even that process by orders of magnitude due to the inherent slowness of solid-state diffusion). Most significantly, the loss of atomic O from the glass (whether as O, $O_2$, $Ge_xO_y$, $Si_xO_y$, etc.) can only occur through the free surface at the solid-gas interface. The net result is substantially reduced loss of $Ge_xO_y$ , resulting in substantial elimination of the center dip, as well as substantially reduced net loss of oxygen from the Ge-doped region, resulting in significantly fewer germanium sub-oxide defect sites. The method is also effective where this inside surface layer is lightly Ge (or F) doped with respect to the Ge levels in the rest of the core. It will be understood at this point that any reduction in the nominal concentration of Ge dopant species at the glass surface will reduce the number of potential defects attributable to this loss mechanism. With respect to the refractive index dip, the variability of this feature can be removed by the addition of the silica layer and, if even a reproducible dip in the center of the profile is undesirable, most of the silica layer can be etched away in the latter stages of collapse avoiding both the profile dip and the increase in the GeO defects in this region.

## Brief Description of the Drawing

Fig. 1 is a preform refractive index profile plot of two step-index type designs, one without and one with a silica buffer layer exaggerated in thickness beyond the requirements of the disclosed invention. The x-axis is in units of millimeters;

Fig. 2 is a fluorescence profile plot of step-index type designs, one without and one with a silica buffer layer, again exaggerated in thickness beyond the requirement of the invention. The x-axis range of this figure (arbitrary units) covers approximately the range between -5 and +5 mm on the x-axis of Fig. 1;

Figs. 3 is a schematic illustration of the defect forming mechanism that is addressed by the invention;

Fig. 4 is a schematic representation of an MCVD process showing deposition of high purity glass on the interior walls of an MCVD starting tube;

Fig. 5 is a representative plot of refractive index vs. radial distance from the center of a conventional prior art preform showing a typical refractive index profile;

Fig. 6 is a representative plot of refractive index vs. radial distance from the center of a preform showing the refractive index profile of a preform manufactured according to the invention;

Fig. 7 shows in more detail a portion of a preform processed according to the invention;

Fig. 8 is an illustration showing the effect on the defect mechanism of Fig. 3 of adding a buffer layer in accordance with the invention;

Figs. 9 and 10 are schematic representations of a rod-in-tube method for making optical fiber preforms; and

Fig. 11 is a schematic representation of a fiber drawing apparatus useful for drawing preforms made by the invention into continuous lengths of optical fiber.

## Detailed Description

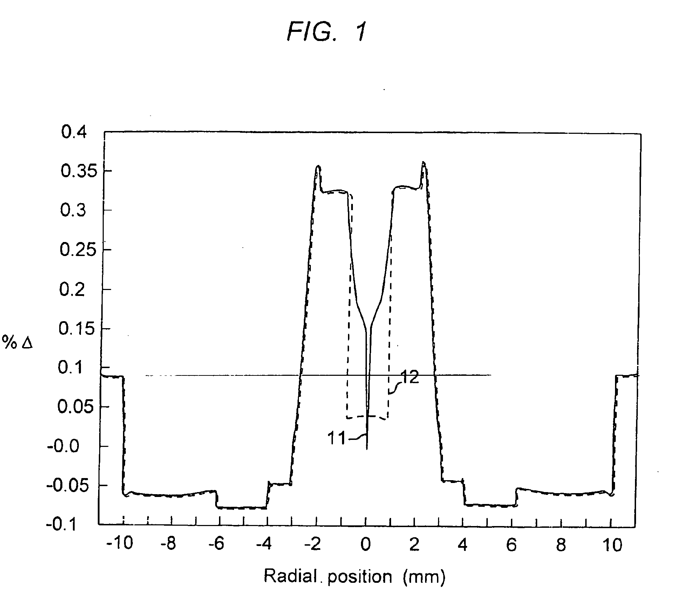

With reference to Fig. 1, two preform refractive index profiles of a step-index-type design are shown. The central step-index core of the fiber is labeled as 1. The spike structure shows individual MCVD layers which display the characteristic MCVD variation from higher index on the OD of a given layer to lower index on the ID of a given layer. This effect is due to evaporation of germanium from the deposited particle surfaces as each layer is sintered. The effect is most evident for the innermost layer - also the thickest, labeled 2 - where the sharp gradation in index is labeled 3, varying from a maximum of approx. 0.325%Δ to a minimum of about 0.225%Δ. The center dip, labeled 4, also known as burnoff, familiar to those skilled in the art, is due to loss of Ge through the inner surface of the hollow MCVD core tube during high temperatures of the collapse step. In the alternate profile, the last deposited layer (4) was replaced by a relatively thick silica layer - an exaggerated embodiment of the present invention.

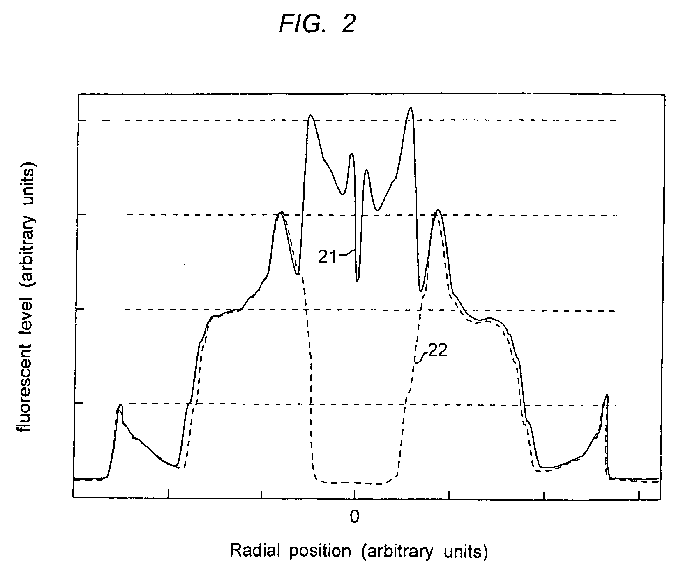

Fig. 2 illustrates the fluorescence profiles associated with the refractive index profiles shown in Fig. 1. The maximum fluorescence of the standard profile (solid line) occurs near the centerline of the preform. It is significant that the region of maximum fluorescence extends beyond the region of burnoff. The existence of burnoff indicates loss of Ge through the inner collapsing surface at high temperature. The existence of enhanced fluorescence indicates a loss of oxygen near the inside surface of the MCVD rod during collapse, proportionately higher than the loss of Ge which in and of itself results in burnoff. If Ge loss in the form of $GeO_2$ were the only process occurring, then enhanced fluorescence would not be expected. However Ge is likely lost as $GeO_x$, where $x > 2$, since Ge has four chemical bonds available. $SiO_x$ with $x>2$ likely sublimates from the surface as well, and other mechanisms for losing oxygen may exist. The depletion of oxygen at the inner surface (solid-gas interface) drives a gradient in [O] concentration deep into the deposited core, beyond the [Ge] concentration gradient. The net result is loss of Ge in the region very near the surface resulting in burnoff, and a depletion of O deeper into the core producing an elevated level of fluorescent germanium sub-oxide defects. The latter can react with hydrogen, for instance during fiber draw, to form GeH which absorbs strongly in the UV and affects optical loss in the WDM signal bands. The dashed line shows the fluorescence profile for the case of a silica layer on the collapsing surface.

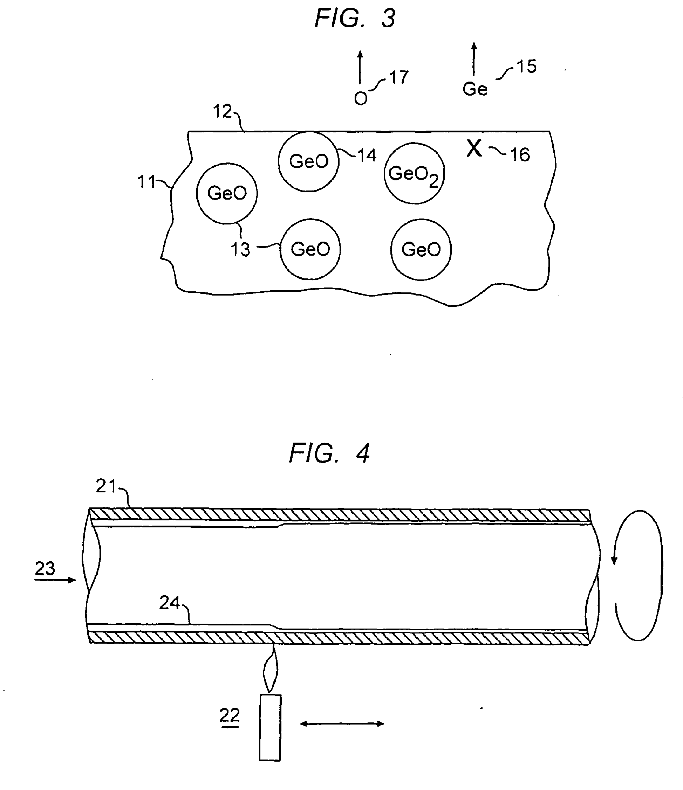

With reference to Fig. 3, a portion 11 of the interior surface of the preform is shown during a typical MCVD process. It should be understood that the mechanisms discussed above and represented in Fig. 3, and the actual illustration, are presented as a postulate of the nature of the defect-forming process. Details of this process are not fully developed. Thus Fig. 3, and the associated description, should not in any way be construed as limitations on the invention.

In Fig. 3, the Ge-doped layers in proximity to the interior collapsing surface of the MCVD tube-deposition combination are represented by 11. The typical state of the Ge dopant in the silica glass matrix is indicated as $GeO_2$. At collapse temperatures (often 2200 to 2300 C) GeO defects are thermally activated, labeled ~ 13. Also at collapse temperatures, Ge atoms, whether bonded as $GeO_2$ or GeO, can diffuse in a concentration gradient over significant distances. Germanium that reaches the surface 12 , e.g. dopant species 14, will release from the surface by a process loosely characterized as sublimation leaving behind a zone of relative Ge dopant depletion 16. Most significant for sub-oxide defect formation, O atoms also leave the glass through the free surface at the ID of the collapsing tube, whether as $GeO_x$ or $SiO_x$ (with $x>2$) or some other form ~ 17. Despite the reduction in the Ge concentration in this region 11, the loss of a higher proportion of oxygen to the collapse surface in this zone increases the fraction of oxygen deficient GeO sites relative to the rest of the core. These states act as precursor sites that, upon interaction with hydrogen or ionizing radiation, form absorptive sites capable of directly absorbing energy in the wavelength band of typical WDM signals. The elimination or reduction of these precursor defect sites is a goal of the invention.

We achieve this by modifying the MCVD process to form a buffer layer at the end of the glass deposition phase, as shown in Fig 4. In general, the MCVD process proceeds as shown in Fig. 4. The starting tube is shown at 21. An oxyhydrogen torch, shown schematically at 22, traverses the length of the outside of the tube while the tube is rotating. An equivalent method, in the context of the invention, employs heat from a plasma source instead of an oxyhydrogen torch. Glass precursor materials, typically $SiCl_4$ and dopants such as $GeCl_4$, are introduced into the interior tube at 23. When the glass precursors reach the hot zone, they form a soot deposit 24 downstream of the torch on the tube wall as shown. In the same pass, the soot layer is sintered into glass as the traversing torch moves the hot zone downstream. Multiple passes form thicker deposits, and allow the composition of the glass deposit to vary radially from the tube center. In the conventional MCVD process, one or more of these layers are formed to produce a refractive index profile in the preform. The MCVD process is well known, and details of the process need no exposition here. See for example, J.B. MacChesney et al, "Preparation of Low Loss Optical Fibers Using Simultaneous Vapor Phase Deposition and Fusion", Xth Int. Congress on Glass, Kyoto, Japan (1973) 6-40.

For the purpose of illustration, a typical preform with a known triple clad design will be described. In this illustration the modified layers are produced by MCVD. The outside cladding layer may also be produced by the same method but in state of the art MCVD processes the outer cladding, and even inner modified layers, may be produced by the known rod-in-tube method. It should be understood that the embodiments described are representative of a wide variety of optical fiber preform designs. The invention is directed to forming improved core structures useful in any of these designs. In many cases, the invention will be applied to the production of core rods, which are then inserted into cladding tubes to produce the final preform.

The following is a description of a typical finished preform. Optical fibers produced from the preform will have index profiles that are smaller replicas of the index profile of the preform. The preform index profile in this example comprises four regions. These are the core region, the trench region, the ring region, and the cladding.

The core consists of a raised index region extending from the central axis of the preform to radius _a_ with the radial variation of the normalized index difference, Δr, described by the equation:

$$\Delta r = \Delta \left(1 - (r/a)^{\alpha}\right) - \Delta_{dip} \left((b-r)/b\right)^{\gamma} \qquad (1)$$

where

r is the radial position,

$\Delta$ is the normalized index difference on axis if $\Delta_{dip} = 0$,

a is the core radius,

$\alpha$ is the shape parameter,

$\Delta_{dip}$ is the central dip depth,

The parameters $\Delta_{dip}$, b, and $\gamma$, i.e. the central dip depth, the central dip width, and the central dip shape, respectively, are artifacts of MCVD production methods.

The equation describing the core shape consists of the sum of two terms. The first term generally dominates the overall shape and describes a shape commonly referred to as an alpha profile. The second term describes the shape of a centrally located index depression (depressed relative to the alpha profile). The core region generally consists of silica doped with germanium at concentrations less than 10 wt% at the position of maximum index, and graded with radius to provide the shape described by equation (1).

Nominal values for the above parameters that yield fiber with the desired transmission properties are:

$$\Delta = 0.50\%, a = 3.51~\mu m, \alpha = 12, \Delta_{dip} = 0.35\%, b = 1.0~\mu m, y = 3.0$$

In general, the range of variation for these parameters may be:

$\Delta = 0.30 \sim 0.70\%$

$a = 2.0 \sim 4.5~\mu m$

$\alpha = 1 \sim 15$

The trench region is an annular region surrounding the core region with an index of refraction that is less than that of the $SiO_2$ cladding. The index of refraction in this region is typically approximately constant as a function of radius, but is not required to be flat. The trench region generally consists of $SiO_2$, doped with appropriate amounts of fluorine and germania to achieve the desired index of refraction and glass defect levels.

Nominal trench parameters are:

$\Delta = -0.21\%$ and width $= 2.51~\mu m$.

In general, the range of variation for these parameters may be:

$\Delta = -0.25 \sim -0.10\%$

$a = 4.0 \sim 8.0~\mu m$

The ring region is an annular region surrounding the trench region with an index of refraction that is greater than that of the $SiO_2$ cladding. The index of refraction in this region is typically constant as a function of radius, but is not required to be flat. The ring region generally consists of $SiO_2$, doped with appropriate amounts of germania to achieve the desired index of refraction.

Nominal ring parameters are:

$\Delta = -0.18~\%$ and width $= 2.00~\mu m$.

In general, the range of variation for these parameters may be:

$\Delta = -0.10 \sim -0.60\%$

$a = 7.0 \sim 10.0~\mu m$

The cladding region is an annular region surrounding the ring, usually consisting of undoped $SiO_2$. However, internal to the cladding region may also exist an additional region of fluorine-doped glass, of the appropriate index level and radial dimensions, to improve bending loss characteristics. The cladding region generally extends to 62.5 $\mu m$ radius.

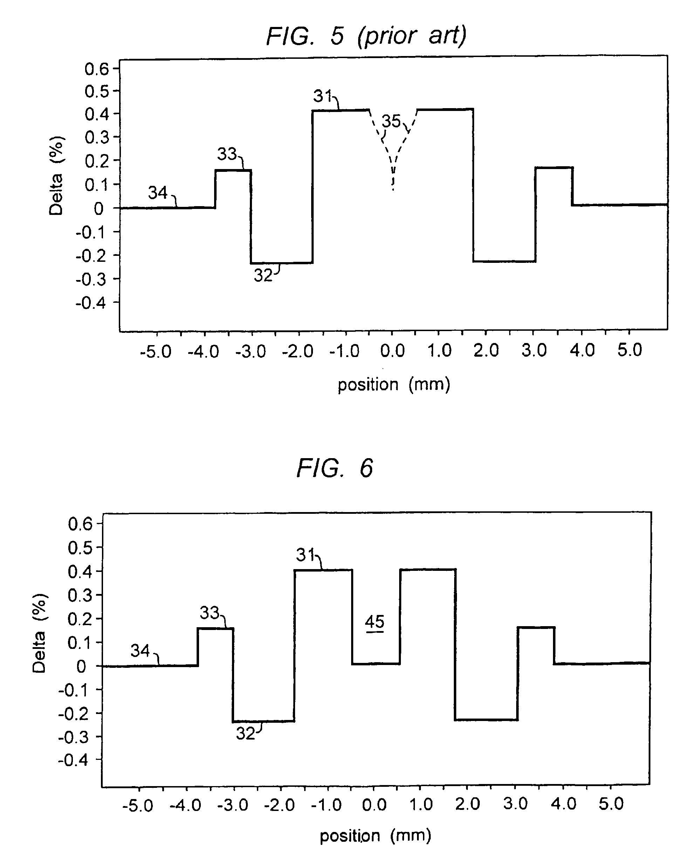

An idealized preform profile that is representative of the preforms having in general the structure just described is shown in Fig. 5. Here the core region is shown at 31, the trench region at 32, the ring region at 33, and the undoped cladding at 34. The characteristic center dip is represented by the dashed lines 35. As mentioned earlier, the core dip is an artifact of the MCVD process and has not been regarded as an ideal feature. In fact, considerable efforts have been devoted to eliminating the core dip.

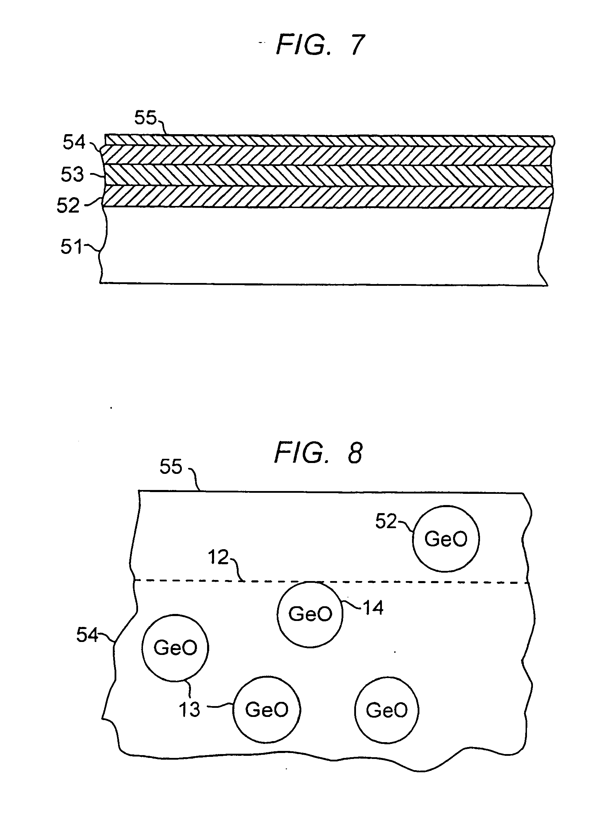

By contrast, we have found that a deliberately produced core dip is beneficial if the core dip results from a deposited buffer layer of undoped or lightly doped silica and the dip is not too wide compared to the diameter of the core. The buffer layer eliminates the opportunity for direct out-diffusion of oxygen from the last doped region of the final MCVD tube and thereby reduces the defects sub-oxide described earlier. The buffer layer is represented in Fig. 6 by region 45, which, in this embodiment, is a layer of undoped silica. The thickness of layer 45 is shown exaggerated for illustration. For the purpose of establishing the minimum width of an effective out-diffusion barrier, we use the reference of Nelson et *al.*-which shows a typical MCVD collapse in an atmosphere that maximizes oxygen diffusion from the core *[Defect formation and related radiation and hydrogen response in optical fiber fabricated by MCVD* - K.T. Nelson, R. M. Atkins, P.J. Lemaire, J.R. Simpson, K.L Walker, S. Wong, D. L. Philen, Technical Digest, Conference on Optical Fiber Communications (Optical Society of America, San Francisco, CA, 1990), paper TuB2] . In that reference, a preform cross sectional area of about 4 mm$^2$ shows the elevated fluorescence associated with GeO sites. In a typical commercial single mode preform, 4 mm$^2$ of area would transform into a radius of about 1 um in the core of the drawn fiber. Such a change in the index profile, while substantial, could be regarded a perturbation of the fiber design (rather than a qualitative change) and its effect on optical properties other than fiber loss (such as dispersion, cutoff wavelength, etc.) could be compensated by adjustment of other portions of the fiber profile. The inner structure of the MCVD tube after MCVD deposition and before collapse is shown in Fig. 7, where the outer cladding layer is represented by layer 51, the ring layer 52, the trench layer 53, the core layer 54, and the buffer layer 55. In describing the invention, an evident characteristic is that the undoped or lightly doped silica layer is the last layer deposited on the inside of the MCVD tube prior to collapse. If the last layer 55 is to be lightly doped, it will have a doping level less than that of the next to last layer deposited, i.e. core layer 54. In a typical case, the doping level at the surface, i.e. the last portion of the buffer layer 55, will be less than 50% of the doping level for the core layer. Alternatively, this doping level may be prescribed as relative delta, or % delta (equal to $(n_{buffer\ layer} - n_{SiO2})/n_{SiO2}$) is less than 0.05%. In some cases it will be desirable to grade the doping in the buffer layer from the doping level of the core layer 54 to zero, or near zero. For the purpose of defining this feature, a buffer layer graded with a doping level graded as just described is referred to a buffer layer with a retro-graded doping level.

In terms of functional features of the invention, it is desirable to have the electric field of the LP01 mode, the primary signal mode, have a maximum at the centerline of the optical fiber core.

It will be evident to those skilled in the art that implementation of the invention may be straightforward, and may simply involve turning off, or reducing the GeCl$_4$ flow rate toward the end of the deposition process.

When MCVD soot deposition and consolidation is complete the tube is collapsed by known techniques, i.e. heating the tube to above the glass softening temperature, i.e. > 2000 - 2400 °C to allow the surface tension of the glass tube to slowly shrink the tube diameter, finally resulting, after multiple passes of the torch, in the desired solid rod. It is during this step in the conventional process that most of the defect formation described above occurs.

The effect of the buffer layer on the defect forming process is schematically shown in Fig. 8, which should be compared with Fig. 3. In Fig. 8 the added buffer layer is shown at 55. It functions to move the solid-gas interface (where O atoms may be lost) away from the Ge-doped region 54, as well as to drastically slow the transport of thermally activated species out of the doped region 54. A relatively small amount of dopant, represented by 52, will diffuse into the buffer layer.

It can be appreciated from Fig. 8 that the optimum thickness desired for layer 55 equals the diffusion length of dopants such as 14 that reside at the surface of the last doped layer (54 in Fig. 7). This length may be calculated from known diffusion data. Since most of the diffusion that causes the defects occurs during collapse, the integrated thermal budget of the collapse step may be used to predict the maximum diffusion length. However, due to the widely varying temperature seen by localized regions of the inner surface of the MCVD tube during sequential traverses of the heating element, a better approach may be to determine the diffusion lengths empirically. However, as mentioned above, a layer of any significant thickness, e.g. 1 micron, will reduce the out-diffusion of dopant to some degree. Accordingly, this value is mentioned as a practical lower limit on the thickness of the buffer layer.

To the extent possible, it will usually be desirable to approximately match the thickness of the buffer layer to the diffusion length of the dopants. This will tend to produce a profile resembling that shown in Fig. 5, with a characteristic core dip. However, even if the core dip profiles appear similar at the end of the process, they are produced by different methods, and the surface glass has a different history. In the conventional case, Fig. 5, the dip is produced by out-diffusion or loss of dopants from the inner glass surface. In the method according to the invention, the profile of the center core dip represents an indiffusion of dopant species from, for example, layer 54 to layer 55 in Fig. 7. In the latter case, loss of dopant from the structure is minimized.

Layers considerably thicker than those just described may be deposited if desired, and thicker layers may be similarly effective. In either case, an optional step in the process is to etch the inner surface of the MCVD tube during the later stages of collapse. This late etch step may be used to remove at least portions of the buffer layer at a stage in the process where much of the potential for out-diffusion of dopants has passed (i.e. the consolidation phase). Etch during collapse in MCVD is typically performed in the prior art by flowing a F-bearing species such as $C_2F_6$, $SF_6$, or $SiF_4$, often in the presence of $O_2$.

In some optical fiber designs, a profile with a large core dip (see Fig. 6) may be unwanted. In some of those cases, it may be desirable to grade the core dip. This is easily done by slowly reducing the doping level of the last deposited layers. Some grading will normally occur due to diffusion of dopant from the last deposited doped layer into the buffer layer. Under these conditions the final profile will appear similar to the shown in Fig. 5. In principle, using precision control over the temperature history of the preform, and precise choice of the thickness of the buffer layer, preforms with profiles very close to those obtained without the buffer layer may be produced. The main difference being that the optical performance of preforms formed with a buffer layer will be relatively devoid of the defects described earlier.

All benefits derived from the practice of the invention for fibers produced by MCVD methods apply equally to fibers with cores fabricated by the plasma CVD or PCVD method. In those methods, like MCVD, material is deposited inside a substrate tube, such that the outer layers of the core are deposited first and the inner most layers (at the centerline of the fiber) are deposited last. Plasma CVD is a true chemical vapor deposition process where the desired material is directly formed on the substrate, unlike MCVD where particles are formed in the gas phase and then deposited on the substrate and sintered in a subsequent step. In spite of the differences, both methods produce a hollow core that must be collapsed in a high temperature step to form a solid rod. Both are susceptible to loss of Ge leading to a center dip, as well as the net loss of oxygen resulting in germanium suboxide defects which may impact fiber loss. Thus the addition of a final silica buffer layer will have all attendant benefits for PCVD fibers as for MCVD fibers.

The invention may also find utility in the outside vapor deposition process (OVD), since a collapse step is also required in that process. The profile center dip is also known to be problematic in OVD fabricated fibers, including those of recent vintage; it can be inferred that GeO defect formation occurs concomitantly as described earlier. In OVD the core is fabricated by deposition of silica and doped silica soot on a mandrel, with subsequent dehydration and consolidation steps. A sintered glass body with a central hole remains. As a final step the core must be collapsed, either prior to or during the draw step. If a silica buffer layer, as described above, is deposited fist in the OVD process, so that it forms the innermost layer in the core, being the exposed surface during collapse, then it will perform a beneficial role similar to that described above for the MCVD process. The principle difference between OVD and MCVD (or PCVD) is that diffusion of Ge into the silica buffer layer will be more pronounced for OVD, since diffusion is facile during the dehydration step in the presence of $Cl_2$. This may raise the dopant level in the silica layer and raise the likelihood of germanium suboxide defects. However, most of the benefit of the invention should still be obtained.

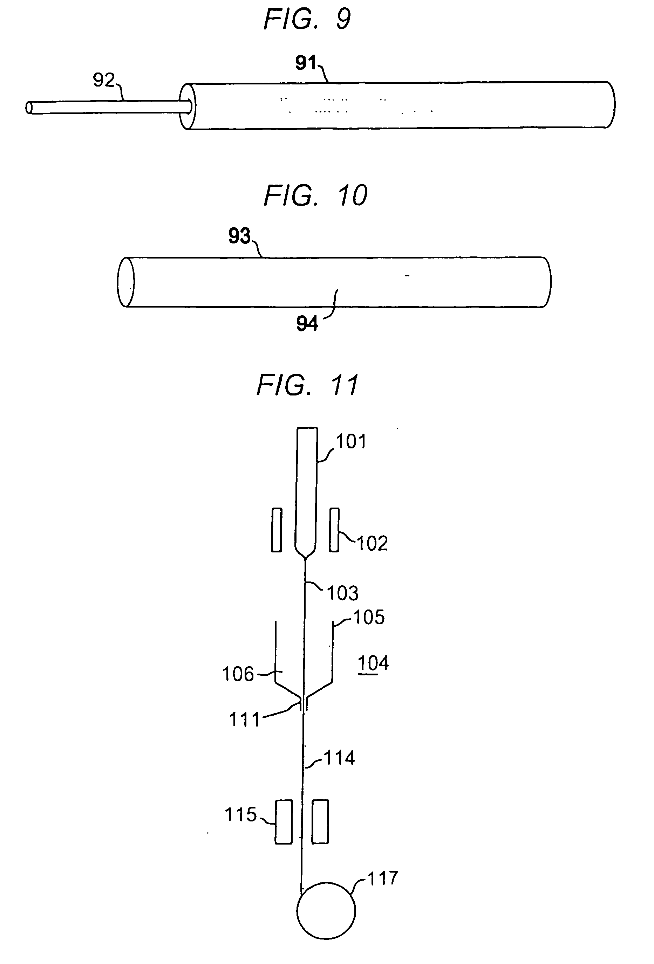

The invention is useful in forming entire preforms by MCVD (or PCVD or OVD), or for producing core rods for rod-in-tube, OVD, VAD, or plasma overspray methods. Rod-in-tube methods represent a preferred embodiment of the invention. Typical rod-in-tube methods are described in conjunction with Figs. 9 and 10. It should be understood that the figures referred to are not necessarily drawn to scale. A cladding tube representative of dimensions actually used commercially has a typical length to diameter ratio of 10-15. The core rod 92 is shown being inserted into the cladding tube 91. There exist several common options for the composition of the core rod. However, in the practice of this invention the core rod has an up-doped, e.g. germania doped, core region. The next cladding region may be a pure silica cladding region, or it may be a down-doped cladding region. These options, and many variations and elaborations, are well known in the art and require no further exposition here.

After assembly of the rod 92 and tube 91, the tube is collapsed onto the rod to produce the final preform 93, shown in Fig. 10, with the core rod 94 indistinguishable from the cladding tube except for a small refractive index difference. Other details of preform manufacture and rod-in-tube techniques are described in U.S. Patent Application Serial No. 10/366,888, filed 02/14/03.

In a useful variation on the standard rod-in-tube technique, the MCVD core rod may be used as a substrate for soot deposition. In this way, cladding layers or partial cladding layers may be deposited using soot techniques.

Although the MCVD process as described above uses a flame torch and a fuel of mixed oxygen and hydrogen, plasma torches or electrically heated furnaces may also be used in these kinds of processes. Also, gas torches other than oxy-hydrogen torches can be used.

The optical fiber preform, as described above, is then used for drawing optical fiber. Fig. 11 shows an optical fiber drawing apparatus with preform 101, and susceptor 102 representing the furnace (not shown) used to soften the glass preform and initiate fiber draw. The drawn fiber is shown at 103. The nascent fiber surface is then passed through a coating cup, indicated generally at 104, which has chamber 85 containing a coating prepolymer 106. The liquid coated fiber from the coating chamber exits through die 111. The combination of die 111 and the fluid dynamics of the prepolymer, controls the coating thickness. The prepolymer coated fiber 114 is then exposed to UV lamps 115 to cure the prepolymer and complete the coating process. Other curing radiation may be used where appropriate. The fiber, with the coating cured, is then taken up by take-up reel 117. The take-up reel controls the draw speed of the fiber. Draw speeds in the range typically of 1-35 m/sec. can be used. It is important that the fiber be centered within the coating cup, and particularly within the exit die 111, to maintain concentricity of the fiber and coating. A commercial apparatus typically has pulleys that control the alignment of the fiber. Hydrodynamic pressure in the die itself aids in centering the fiber. A stepper motor, controlled by a micro-step indexer (not shown), controls the take-up reel.

Coating materials for optical fibers are typically urethanes, acrylates, or urethane-acrylates, with a UV photoinitiator added. The apparatus is Fig. 11 is shown with a single coating cup, but dual coating apparatus with dual coating cups are commonly used. In dual coated fibers, typical primary or inner coating materials are soft, low modulus materials such as silicone, hot melt wax, or any of a number of polymer materials having a relatively low modulus. The usual materials for the second or outer coating are high modulus polymers, typically urethanes or acrylics. In commercial practice both materials may be low and high modulus acrylates. The coating thickness typically ranges from 150-300 $\mu$m in diameter, with approximately 240-245 $\mu$m being standard.

Designs for optical fibers exist in the prior art in which a key feature is the presence of a region of local minimum in refractive index in the neighborhood of the fiber centerline. These designs may use a centerline value of refractive index that is greater than, equal to, or less than that of the outer cladding glass (nominally pure silica), but where the higher refractive index of the surrounding ring is primarily responsible for forming the optical waveguide. These are sometimes referred to as "coax designs" or "ring designs," and often result in large effective areas by virtue of pushing the optical power away from the fiber centerline. In contrast, the present invention uses the silica buffer layer in processing the core material to improve the optical quality of the glass. The present invention is further differentiated from coax or ring designs in that any impact on the optical transmission properties of the fiber will generally be small, on the order of 10% or less. In general the buffer layer, if not etched away during final stages of collapse, and thus allowed to remain in the preform, will be less than 1 micron in radius in the final fiber, and preferably less than 0.5 microns, and even more desirably less than 0.25 microns. For a given waveguide design, very similar properties can be obtained with and without the presence of a silica (or lightly-doped silica) buffer layer by minor adjustments in the other design parameters, such as the widths and index values of the features shown in FIGS. 3 and 4.

The method is also useful to eliminate the undesirable impact of burnoff in multimode fiber fabrication, where fiber bandwidth depends critically on precise control of the alpha shape of the core (see previous definition). One method in the prior art relies on etching away the center dip region during collapse. Though effective in eliminating the center dip or burnoff region, it does not address the problem of increased defects and associated loss. Multimode fiber has a high core delta (1 to 2%$\Delta$) and is naturally susceptible to a high level of GeO defects. Multimode fiber is also commonly used in the 850nm window, which is closer to the UV resonance of GeH than the case of single mode fiber transmission near 1550nm.

## Claims

1. Process for the manufacture of optical fiber comprising:

   (a) preparing an optical fiber preform,
   (b) heating the preform to the softening temperature, and
   (c) drawing an optical fiber from the preform, the invention **characterized in that** the optical fiber preform is produced by:

   (i) forming a doped core layer on the inside of a starting tube, the core layer having a doping level L,
   (ii) forming a buffer layer on the doped core layer, the buffer layer deposited with a doping level L', where L' < L, and thereafter,
   (iii) collapsing the tube to produce a solid glass cylindrical body.

2. The process of claim 1 wherein the doping level L' is approximately zero.

3. The process of claim 1 wherein the doping level in the buffer layer is retrograded.

4. The process of claim 1 wherein L' is less than 50% of L.

5. The process of claim 1 wherein L' has delta < 0.05%.

6. The process of claim 1 wherein the LP01 electric field has a maximum value at the centerline of the optical fiber.

7. The process of claim 1 wherein the solid glass cylindrical body is a rod and the process further comprises inserting the rod into a cladding tube and collapsing the tube on the rod to form the preform.

8. The process of claim 1 wherein the solid glass cylindrical body is a rod and the process further comprises overcladding the rod by deposition of glass on the rod.

9. The process of claim 1 wherein the thickness of the buffer layer is greater than 1 micron.

10. The process of claim 9 wherein the thickness of the buffer layer is in the range 2-100 microns.

11. The process of claim 1 wherein the presence of the buffer layer in the final fiber causes less than a 10% change in each of the optical transmission properties of dispersion, dispersion slope, effective area, and mode field diameter at a wavelength of 1550nm.

12. The process of claim 1 wherein the preform is produced using MCVD.

13. The process of claim 1 wherein the preform is produced using PCVD.

14. The process of claim 1 including the additional step of etching the buffer layer prior to collapsing the tube.

15. Process for the manufacture of an optical fiber preform comprising:

> (a) forming a doped core layer on the inside of a starting tube, the core layer having a doping level L,
> (b) forming a buffer layer on the doped core layer, the buffer layer deposited with a doping level L', where L' < L, and thereafter,
> (c) collapsing the tube to produce a solid glass cylindrical body.

16. The process of claim 15 wherein the doping level L' is approximately zero.

17. The process of claim 15 wherein L' is less than 50% of L.

18. The process of claim 15 wherein the thickness of the buffer layer is in the range 2-100 microns.

19. Process for the manufacture of optical fiber comprising:

> (a) preparing an optical fiber preform using OVD,
> (b) heating the preform to the softening temperature, and
> (c) drawing an optical fiber from the preform,

the invention **characterized in that** the optical fiber preform is produced by:

> (i) forming a buffer layer on a mandrel, the buffer layer having a doping level L',
> (ii) forming a doped core layer on the buffer layer, the doped core layer deposited with a doping level L, where L > L', and thereafter,
> (iii) removing the mandrel leaving a tube,
> (iv) collapsing the tube to produce a solid glass cylindrical body.

**Patentansprüche**

1. Verfahren zur Herstellung einer optischen Faser, das folgende Schritte umfasst:

> (a) Herstellen einer Optische-Faser-Vorform,
> (b) Erhitzen der Vorform auf die Erweichungstemperatur, und
> (c) Ziehen einer optischen Faser aus der Vorform,
> wobei die Erfindung **dadurch gekennzeichnet ist, dass** die Optische-Faser-Vorform anhand folgender Schritte hergestellt wird:

> > (i) Bilden einer dotierten Kernschicht auf der Innenseite einer Ausgangsröhre, wobei die Kernschicht einen Dotierungspegel L aufweist,
> > (ii) Bilden einer Pufferschicht auf der dotierten Kernschicht, wobei die Pufferschicht mit einem Dotierungspegel L' aufgebracht wird, wobei L' < L, und danach

(iii) Zusammendrücken der Röhre, um einen zylindrischen Festkörper aus Glas zu erzeugen.

2.  Das Verfahren gemäß Anspruch 1, bei dem der Dotierungspegel L' etwa null beträgt.

3.  Das Verfahren gemäß Anspruch 1, bei dem der Dotierungspegel in der Pufferschicht rückläufig ist.

4.  Das Verfahren gemäß Anspruch 1, bei dem L' weniger als 50 % von L beträgt.

5.  Das Verfahren gemäß Anspruch 1, bei dem L' Delta < 0,05 % aufweist.

6.  Das Verfahren gemäß Anspruch 1, bei dem das elektrische LP01-Feld einen maximalen Wert an der Mittellinie der optischen Faser aufweist.

7.  Das Verfahren gemäß Anspruch 1, bei dem der zylindrische Festkörper aus Glas ein Stab ist, und wobei das Verfahren ferner ein Einführen des Stabes in eine Verkleidungsröhre und ein Zusammendrücken der Röhre auf dem Stab, um die Vorform zu bilden, umfasst.

8.  Das Verfahren gemäß Anspruch 1, bei dem der zylindrische Festkörper aus Glas ein Stab ist, und wobei das Verfahren ferner ein Verkleiden des Stabes durch eine Aufbringung von Glas auf den Stab umfasst.

9.  Das Verfahren gemäß Anspruch 1, bei dem die Dicke der Pufferschicht größer als 1 Mikrometer ist.

10. Das Verfahren gemäß Anspruch 9, bei dem die Dicke der Pufferschicht im Bereich 2-100 Mikrometer liegt.

11. Das Verfahren gemäß Anspruch 1, bei dem das Vorliegen der Pufferschicht in der Endfaser eine weniger als 10 % betragende Veränderung bezüglich jeder der Optische-Übertragung-Eigenschaften in Bezug auf Dispersion, Dispersions-Slope, Wirkfläche und Modenfelddurchmesser bei einer Wellenlänge von 1550 nm bewirkt.

12. Das Verfahren gemäß Anspruch 1, bei dem die Vorform unter Verwendung von MCVD hergestellt wird.

13. Das Verfahren gemäß Anspruch 1, bei dem die Vorform unter Verwendung von PCVD hergestellt wird.

14. Das Verfahren gemäß Anspruch 1, das den zusätzlichen Schritt des Ätzens der Pufferschicht vor dem Zusammendrücken der Röhre umfasst.

15. Verfahren zur Herstellung einer Optische-Faser-Vorform, das folgende Schritte umfasst:

    (a) Bilden einer dotierten Kernschicht auf der Innenseite einer Ausgangsröhre, wobei die Kernschicht einen Dotierungspegel L aufweist,
    (b) Bilden einer Pufferschicht auf der dotierten Kernschicht, wobei die Pufferschicht mit einem Dotierungspegel L' aufgebracht wird, wobei L' < L, und danach
    (c) Zusammendrücken der Röhre, um einen zylindrischen Festkörper aus Glas zu erzeugen.

16. Das Verfahren gemäß Anspruch 15, bei dem der Dotierungspegel L' etwa null beträgt.

17. Das Verfahren gemäß Anspruch 15, bei dem L' weniger als 50 % von L beträgt.

18. Das Verfahren gemäß Anspruch 15, bei dem die Dicke der Pufferschicht im Bereich 2-100 Mikrometer liegt.

19. Verfahren zur Herstellung einer optischen Faser, das folgende Schritte umfasst:

    (a) Herstellen einer Optische-Faser-Vorform unter Verwendung eines Außenabscheideverfahrens,
    (b) Erhitzen der Vorform auf die Erweichungstemperatur, und
    (c) Ziehen einer optischen Faser aus der Vorform,
    wobei die Erfindung **dadurch gekennzeichnet ist, dass** die Optische-Faser-Vorform anhand folgender Schritte hergestellt wird:

(i) Bilden einer Pufferschicht auf einem Dorn, wobei die Pufferschicht einen Dotierungspegel L' aufweist,
(ii) Bilden einer dotierten Kernschicht auf der Pufferschicht, wobei die dotierte Kernschicht mit einem Dotierungspegel L aufgebracht wird, wobei L > L', und danach
(iii) Beseitigen des Dornes, wobei eine Röhre zurückbleibt,
(iv) Zusammendrücken der Röhre, um einen zylindrischen Festkörper aus Glas zu erzeugen.

**Revendications**

1. Procédé de fabrication de fibre optique, comprenant :

    (a) préparer une préforme de fibre optique,
    (b) chauffer la préforme jusqu'à la température de ramollissement, et
    (c) étirer une fibre optique à partir de la préforme,

    l'invention étant **caractérisée par le fait que** la préforme de fibre optique est produite par :

    (i) formation d'une couche de noyau dopée à l'intérieur d'un tube de départ, la couche de noyau présentant un niveau de dopage L,
    (ii) formation d'une couche tampon sur la couche de noyau dopée, la couche tampon étant déposée avec un niveau de dopage L', où L' < L, et ensuite,
    (iii) écrasement du tube pour produire un corps cylindrique de verre plein.

2. Procédé selon la revendication 1, **caractérisé par le fait que** le niveau de dopage L' est environ zéro.

3. Procédé selon la revendication 1, **caractérisé par le fait que** le niveau de dopage dans la couche tampon est gradué de manière rétrograde.

4. Procédé selon la revendication 1, **caractérisé par le fait que** L' est inférieur à 50% de L.

5. Procédé selon la revendication 1, **caractérisé par le fait que** L' présente un delta < 0,05%.

6. Procédé selon la revendication 1, **caractérisé par le fait que** le champ électrique LPO1 présente une valeur maximale à la ligne médiane de la fibre optique.

7. Procédé selon la revendication 1, **caractérisé par le fait que** le corps cylindrique de verre plein est une tige et que le procédé comprend, par ailleurs, l'insertion de la tige dans un tube de revêtement et l'écrasement du tube sur la tige, pour former la préforme.

8. Procédé selon la revendication 1, **caractérisé par le fait que** le corps cylindrique de verre plein est une tige et que le procédé comprend, par ailleurs, le surrevêtement de la tige par dépôt de verre sur la tige.

9. Procédé selon la revendication 1, **caractérisé par le fait que** l'épaisseur de la couche tampon est supérieure à 1 micron.

10. Procédé selon la revendication 9, **caractérisé par le fait que** l'épaisseur de la couche tampon se situe dans la plage de 2 à 100 microns.

11. Procédé selon la revendication 1, **caractérisé par le fait que** la présence de la couche tampon dans la fibre finale provoque un changement inférieur à 10% de chacune parmi les propriétés de transmission optique: dispersion, pente de dispersion, superficie efficace, et diamètre du champ de mode à une longueur d'onde de 1550 nm.

12. Procédé selon la revendication 1, **caractérisé par le fait que** la préforme est produite par MCVD.

13. Procédé selon la revendication 1, **caractérisé par le fait que** la préforme est produite par PCVD.

14. Procédé selon la revendication 1, comportant l'étape additionnelle consistant à graver la couche tampon avant d'écraser le tube.

**15.** Procédé de fabrication d'une préforme de fibre optique consistant à :

(a) former une couche de noyau dopée à l'intérieur d'un tube de départ, la couche de noyau présentant un niveau de dopage L,
(b) former une couche tampon sur la couche de noyau dopée, la couche tampon étant déposée avec un niveau de dopage L', où L' < L, et ensuite,
(c) écraser le tube pour produire un corps cylindrique de verre plein.

**16.** Procédé selon la revendication 15, **caractérisé par le fait que** le niveau de dopage L' est environ zéro.

**17.** Procédé selon la revendication 15, **caractérisé par le fait que** L' est inférieur à 50% de L.

**18.** Procédé selon la revendication 15, **caractérisé par le fait que** l'épaisseur de la couche tampon se situe dans la plage de 2 à 100 microns.

**19.** Procédé de fabrication de fibre optique consistant à :

(a) préparer une préforme de fibre optique par OVD,
(b) chauffer la préforme jusqu'à la température de ramollissement, et
(c) étirer une fibre optique à partir de la préforme,

l'invention étant **caractérisée par le fait que** la préforme de fibre optique est produite par :

(i) formation d'une couche tampon sur un mandrin, la couche tampon présentant un niveau de dopage L',
(ii) formation d'une couche de noyau dopée sur la couche tampon, la couche de noyau dopée étant déposée avec un niveau de dopage L, où L > L', et ensuite,
(iii) enlèvement du mandrin, laissant un tube,
(iv) écrasement du tube pour produire un corps cylindrique de verre plein.

## FIG. 1

## FIG. 2

fluorescent level (arbitrary units)

Radial position (arbitrary units)

## FIG. 3

## FIG. 4

## FIG. 5 (prior art)

## FIG. 6

## *FIG. 7*

## *FIG. 8*

## FIG. 9

## FIG. 10

## FIG. 11